# EUROPÄISCHE PATENTSCHRIFT

(11) **EP 0 802 037 B1**
(45) Veröffentlichungstag und Bekanntmachung des Hinweises auf die Patenterteilung: **10.10.2001**
(21) Anmeldenummer: 97104984.6
(22) Anmeldetag: 24.03.1997
(51) Int. Cl.: B29C 70/74, B29C 70/78, B29C 33/00, B29C 45/14, B22D 19/00, B22D 17/20, B60B 33/00

(54) **Verbundbauteil**
Composite article
Pièce composite

(30) Priorität: 20.04.1996 DE 19615783; 04.07.1996 DE 19626974
(43) Veröffentlichungstag der Anmeldung: 22.10.1997
(73) Patentinhaber: Georg Fischer Mössner GmbH, 81737 München (DE); Ford-Werke Aktiengesellschaft, 50735 Köln (DE)
(72) Erfinder: Jasinetzky, Arthur, 81539 München (DE); Wirtz, Hans-Peter, 50769 Köln (DE)
(74) Vertreter: Splanemann Reitzner Baronetzky Westendorp Patentanwälte

(56) Entgegenhaltungen:
- DE-A- 3 339 355
- US-A- 5 094 076
- PATENT ABSTRACTS OF JAPAN vol. 012, no. 392 (M-755), 19. Oktober 1988 & JP 63 141712 A (NIPPON COLUMBIA CO LTD), 14. Juni 1988

## Beschreibung

Die Erfindung betrifft ein Verbundbauteil.

Ein bekanntes Verbundbauteil ist unter anderem aus der US-PS-5 094 076 bekannt. Dieses Verbundbauteil weist ein Nabenteil auf, das von einem im Spritzgußverfahren hergestellten Kunststoffbauteil umgeben ist. Das Kunststoffbauteil wird bei der Herstellung angegossen, wobei ein Übertragungskonus Anschläge für Dichtplatten aufweist, die verhindern sollen, daß die Spritzgußmasse in den inneren Bereich des Nabenteils hineingeraten kann. Nachteilig hierbei ist es, daß separate Abdichtplatten erforderlich sind, die dem Spritzgußdruck standhalten müssen.

Wenn andererseits ein Druckgußteil beispielsweise aus Aluminiium hergestellt werden soll, ist ein Spritzgußdruck von 400 bis 600 bar erforderlich, was eine entsprechend starke Auslegung von Dichtplatten erfordern würde.

Nachteilig bei der vorbekannten Lösung ist ferner, daß durch die geschlossene Ausbildung des Verbundbauteils die im Nabenteil vorgesehene Rollenfreilaufkupplung hermetisch abgeschlossen wird, so daß ein Nachschmieren zerstörungsfrei nicht möglich ist und es insbesondere nicht möglich ist, die Rollenfreilaufkupplung an den Schmiermittelkreislauf eines hydrokinetischen Drehmomentwandlers anzuschließen. Ferner erfordert die zusätzliche Anordnung der Dichtplatten eine genaue Justage, die mit einem speziellen Konus erreicht werden soll, um die Entstehung einer Unwucht zu verhindern.

Bei Rollenfreilaufkupplungen müssen die den Rollen zugewandten Bereiche des Nabenteils so hart wie möglich sein, nachdem durch die besondere Konstruktion einer Rollenfreilaufkupplung erhebliche radiale Kräfte übertragen werden müssen, allein schon um einen vorzeitigen Verschleiß zu verhindern.

Zwar kann die Dichtplatte gemäß der US-PS 5 094 076 aus vergleichsweise weichem und insofern für Dichtzwecke geeignetem Material hergestellt werden. Jedoch ist die Dichtwirkung insgesamt eher unbefriedigend, nachdem aufgrund des zusätzlichen Bauelements praktisch auch eine zusätzliche Dichtstelle entsteht und die Funktion der Dichtplatte sehr von der exakten Bearbeitung des Nabenteils bzw. der gleichmäßigen Preßkraft über die Anschläge des dortigen Konus abhängt.

Demgegenüber liegt der Erfindung die Aufgabe zugrunde, ein Verbundbauteil gemäß dem Oberbegriff von Anspruch 1 zu schaffen, das trotz Verschleißfestigkeit des Nabenteils eine sichere Abdichtung beim Anspritzen oder Angießen des Druckgußteils ermöglicht.

Diese Aufgabe wird erfindungsgemäß durch Anspruch 1 gelöst. Vorteilhafte Weiterbildungen ergeben sich aus den Unteransprüchen.

Die erfindungsgemäße Herstellung eines Verbundbauteils ermöglicht überraschend trotz des enormen Drucks beim Einschießen des Druckgußwerkstoffs wie Magnesium oder Aluminium oder anderer geeigneter Leichtmetallegierungen eine sichere Abdichtung des Nabenteils gegenüber der Druckgußform. Durch eine entsprechende Schließkraft der Form läßt sich der erfindungsgemäße Dichtvorsprung verformen, wobei die Verformung sowohl elastisch als auch plastisch erfolgen kann und bevorzugt partiell plastisch und partiell elastisch erfolgt.

Besonders günstig ist es, daß durch diese Verformung praktisch automatisch etwaige Unebenheiten der Gießform ausgeglichen und sicher abgedichtet werden, was die Anforderungen an die Oberflächenqualität der Werkzeuge reduziert und somit die Herstellkosten vermindert.

Überraschend läßt sich diese Maßnahme auch dann verwenden, wenn eine Rollenfreilaufkupplung, die das Nabenteil aufweist, sehr harte Arbeitsflächen benötigt. Diese werden kurzerhand gehärtet, so daß das Nabenteil an sich lediglich in den Bereichen eine erhöhte Härte aufweist, in denen dies erforderlich ist.

Bevorzugt sind die Dichtvorsprünge als ringförmige Dichtlippen ausgebildet und erstrecken sich somit kreisringförmig auf einander gegenüberliegenden Stirnflächen des Nabenteils. Durch die Schließkraft der Form erfolgt damit praktisch automatisch eine Zentrierung und Optimierung des dichtenden Anliegens zwischen den Formwerkzeugen, also insbesondere den Formhälften, und dem Nabenteil. Die erforderliche Schließkraft für die Form wird durch die erfindungsgemäßen Dichtvorsprünge nicht erhöht.

Dadurch, daß das Nabenteil an seinen axialen Endflächen mit Ringwülsten versehen ist, die unmittelbar von den beiden Gießformhälften beaufschlagbar und zur Abdichtung plastisch verformbar sind, wird mit geringem Aufwand eine einwandfreie Abdichtung zur Verfügung gestellt, ohne daß zum Beispiel an den Gießformhälften aufwendige, für eine Vielzahl von Arbeitszyklen ausgelegte Dichtungsanordnungen vorgesehen werden müssen.

Das Nabenteil ist gemäß einer bevorzugten Ausgestaltung als ein Außenlaufring einer Rollenfreilaufkupplung für ein Leitrad eines hydrokinetischen Drehmomentwandlers ausgebildet und weist, ausgehend von einer konischen Fase, an seinen axialen Stirnflächen Ringwülste oder Dichtvorsprünge mit einem sägezahn- oder dreieckförmigen Querschnitt auf.

Gemäß einer weiteren Ausgestaltung ist das Nabenteil in Form des Außenlaufringes einer Rollenfreilaufkupplung an seinem radialen Außenumfang mit einer Anzahl von radial vorragenden Flächenvorsprüngen versehen, die den bruchgefährdeten Querschnitt im Bereich der Ausnehmungen für die Rollen der Rollenfreilaufkupplung verstärkend übergreifen.

Besonders günstig ist es ferner, wenn der Dichtvorsprung angrenzend an eine konische Schrägfläche vorgesehen ist. Beim Schuß des Druckgußmaterials wird durch die sich insofern verjüngende Querschnittsfläche zum Dichtvorsprung hin die Konusfläche praktisch zu einer Art Prallfläche, so daß kein besonders hoher dynamischer Druck an der Dichtung anliegt.

Der Dichtvorsprung oder Ringwulst kann einen beliebigen geeigneten Aufbau aufweisen, der für die Ausbildung einer Dichtung unter Erzeugung einer Verformung geeignet ist. Beispielsweise kann der Dichtvorsprung einen im wesentlichen sägezahnförmigen Querschnitt mit bevorzugt abgerundeten Spitzen aufweisen.

Es versteht sich, daß das Übermaß des unbelasteten Dichtvorsprungs gegenüber den Formwerkzeugen in weiten Bereichen an die Erfordernisse anpaßbar ist. Bevorzugt wird das Übermaß so gewählt, daß mindestens ein nennenswerter Teil von beispielsweise 20% der Schließkraft, die beispielsweise etwa 10 GN (1000 t) betragen kann, über den Dichtvorsprung aufgefangen und als Dichtkraft verwendet wird.

Weitere Einzelheiten, Vorteile und Merkmale ergeben sich aus der nachstehenden Beschreibung mehrerer Ausführungsbeispiele anhand der Zeichnungen.

Es zeigen:
- Fig. 1: einen vertikalen Teilschnitt durch ein Leitrad eines hydrokinetischen Drehmomentwandlers, das durch einen Nabenteil aus härterem Material und einem Druckgußteil aus leichterem Material gebildet wird und wobei die nicht unmittelbar zum Verbundbauteil gehörenden Bauteile der Rollenfreilaufkupplung strichpunktiert angedeutet sind;
- Fig. 2: eine Teilansicht des Nabenteils in Form des Außenlaufrings der Rollenfreilaufkupplung;
- Fig. 3: einen vergrößerten Teilschnitt entlang der Linie III-III in Fig. 2;
- Fig. 4: einen vergrößerten Teilschnitt einer modifizierten Ausgestaltung zu Fig. 3, jedoch vor der Verformung durch Gießformhälften; und
- Fig. 5: einen vergrößerten Teilschnitt der Ausgestaltung gemäß Fig. 3, jedoch nach der Verformung durch die Gießform.

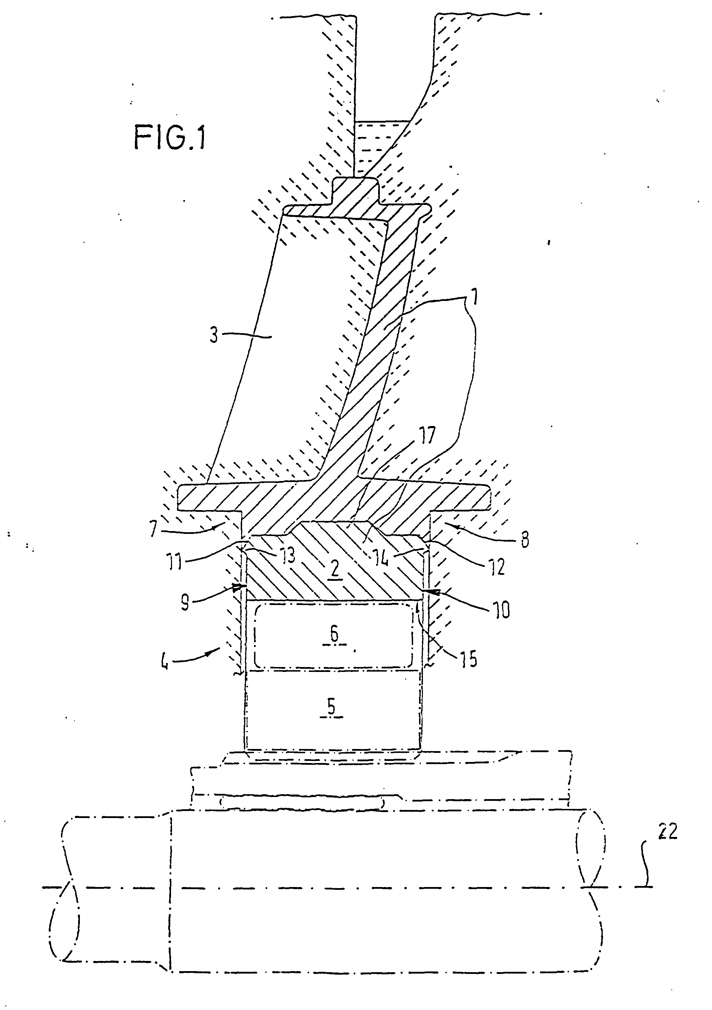

In Fig. 1 ist ein erfindungsgemäßes Verbundbauteil 1 in einem Radialschnitt dargestellt. Es besteht aus einem Nabenteil 2 aus einem härteren Material und einem Druckgußteil 3 aus leichterem und/oder weicherem Material.

Das Nabenteil 2 bildet hierbei den Außenlaufring einer Rollenfreilaufkupplung 4, deren weitere Bauteile, wie der Innenlaufring 5 und die Rollen 6, nur in strichpunktierten Linien angedeutet sind.

Mit Bezugszeichen 7 und 8 sind Bereiche zweier Gießformhälften einer zwei- oder mehrteiligen Gießform angedeutet, in die das Nabenteil 2 eingelegt wird und mit dem weicheren oder leichteren Material, z.B. Kunststoff oder Aluminium, durch Druckgießen zum Verbundbauteil 1 verbunden wird.

Erfindungsgemäß sind an den axialen Endflächen oder Stirnflächen 9 und 10 des Nabenteils 2, ausgehend von konischen Fasen oder Schrägflächen 11 und 12, Dichtvorsprünge 13 und 14 mit einem im wesentlichen dreieckförmigen Querschnitt ausgebildet, die unmittelbar von den Gießformhälften beaufschlagbar sind. Die Schrägflächen 11 und 12 erstecken sich bei dem bevorzugten Ausführungsbeispiel im Winkel von etwa 65° zu einer Achse 22 des Nabenteils 2.

Das Nabenteil 2, das im vorliegenden Fall den Außenlaufring einer Rollfreilaufkupplung bildet, besteht hierbei aus Stahl und ist an seiner inneren Nockenkontur 15, und zwar an den Arbeitsbereichen 23 und 24, gehärtet.

Das Härten erfolgt bevorzugt vor dem Angießen des Druckgußteils 3, wobei die Härt-Tiefe in weiten Bereichen an die Erfordernisse anpaßbar ist und bevorzugt etwa 2 mm für den Arbeitsbereich 24 für die Führung der Rollen 6 der Rollenfreilaufkupplung und etwa 3 mm im Arbeitsbereich 23 für die Lagerung des Innenlaufrings 5 beträgt.

Im Bereich des Außenumfangs und im Bereich der Ringwülste 13 und 14 bleibt das Stahlmaterial ungehärtet, so daß es durch den sehr hohen Schließdruck der Gießformhälften 7 und 8 plastisch verformbar ist und somit für eine zuverlässige Abdichtung sorgt.

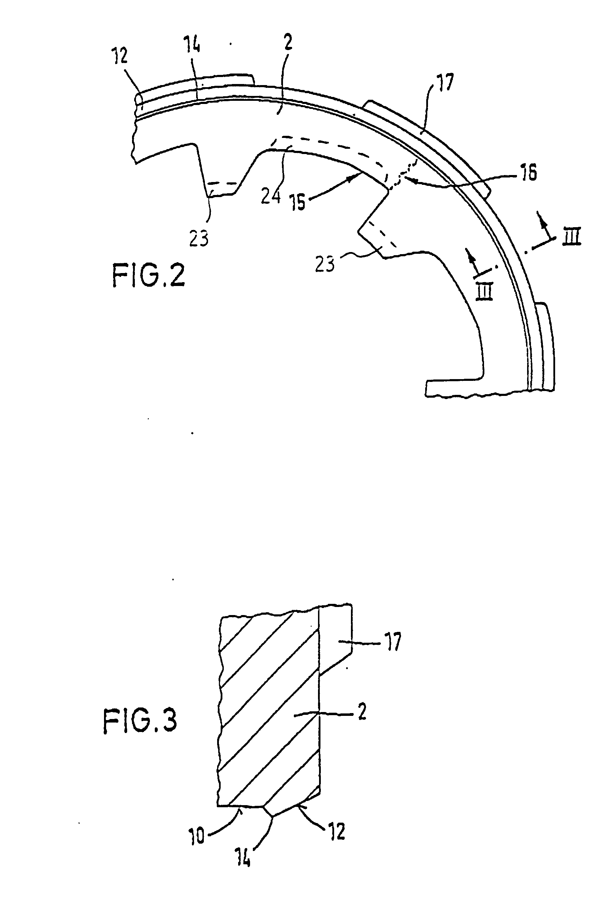

Wie aus Fig. 2 ersichtlich ist, führt die Nockenkontur 15 am Außenlaufring 2 einer Rollenfreilaufkupplung zu einem bruchgefährdeten Querschnitt im Bereich des Pfeiles 16. Durch die Ausbildung einer Anzahl von radial vorragenden Flächenvorsprüngen 17, die diesen Bereich übergreifen, kann dieser bruchgefährdete Querschnitt in günstiger Weise verstärkt werden.

Gleichzeitig sorgen die Flächenvorsprünge 17 für eine günstigere Verankerung des Druckgußteils am Nabenteil, um die am Druckgußteil auftretenden Drehmomente sicher auf das Nabenteil 2 zu übertragen.

Für das Druckgußteil kann hierbei vorzugsweise eine Aluminium- oder eine Magnesiumlegierung oder aber auch entsprechende Kunststoffmaterialien verwendet werden.

Durch das Druckgießen wird der Nabenteil ringförmig unter Druck gesetzt. Nach Erkalten der Form erfolgt dementsprechend eine Ausdehnung aufgrund des nachlassenden Spritzgußdrucks, die beispielsweise 1/20 mm betragen kann. Um diese Durchmesseränderung zu kompensieren, kann entweder von vorne herein ein Nabenteil 2 mit entsprechend angepaßtem Durchmesser verwendet werden, oder es erfolgt ein Nachschleifen.

Erfindungsgemäß läßt sich hier stets eine optimale Anpassung der zu verwendenden Werkstoffe in Hinblick auf deren Gewichts/Festigkeits-Verhältnis durch unmittelbares Angießen mittels der erfindungsgemäßen Dichtlippen oder Dichtvorsprünge 13 und 14 trotz der vorgesehenen Verwendung von gehärteten Arbeitsbereichen 23 und 24 realisieren.

Die Härtung kann bei Bedarf auch erst nach Abschluß des Gießvorgangs erfolgen, wobei in diesem Zusammenhang eine induktive Härtung bevorzugt ist. Es versteht sich, daß bei einer derartigen Lösung ein Nachschleifen erforderlich sein kann.

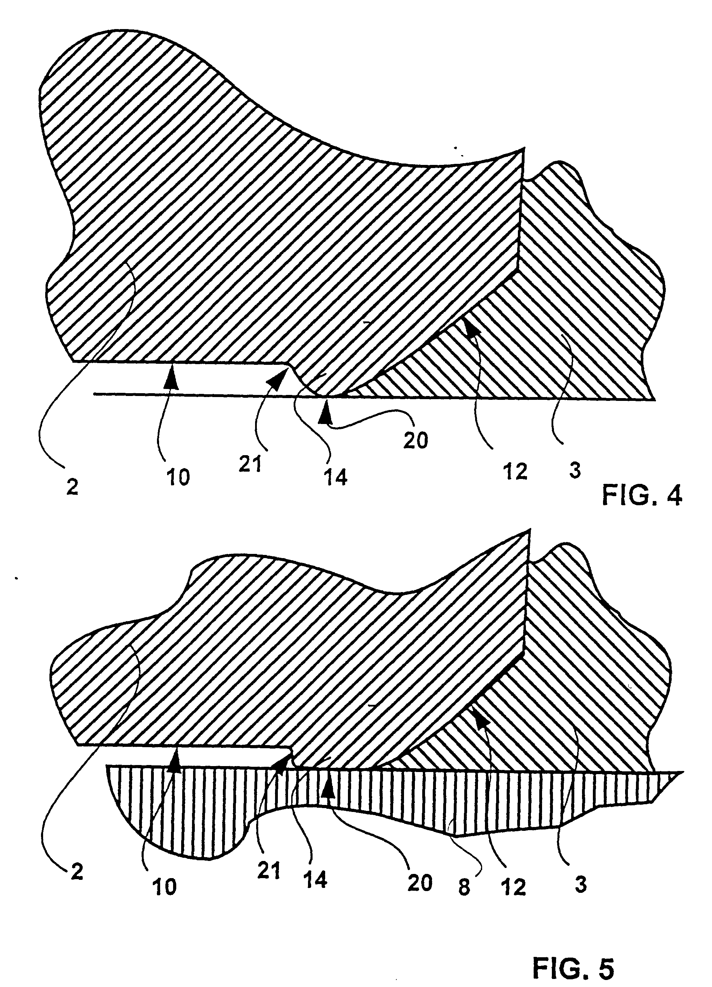

Bei dem aus Fig. 4 ersichtlichen Ausführungsbeispiel ist ein Radius 20 am Kamm des Dichtvorsprungs 14 ausgebildet. Diese Ausgestaltung erlaubt gegenüber einem sägezahnförmigen Aufbau des Dichtvorsprungs 14 eine etwas reduzierte Flächenpressung und eine etwas höhere Verträglichkeit gegenüber fertigungsbedingten Herstellungstoleranzen. Zusätzlich zu dem Außenradius 20 am Kamm des Dichtvorsprungs 14 ist im Bereich der Überleitung zur Stirnfläche 10 ein Innenradius 21 vorgesehen.

Der gesamte aus Fig. 4 ersichtliche Bereich des Nabenteils 2 ist ungehärtet, im Gegensatz zu den Arbeitsflächen oder -bereichen 23 und 24, die in Fig. 2 dargestellt sind.

Aus Fig. 5 ist ersichtlich, in welcher Weise sich der Dichtvorsprung 14 durch den Schließdruck der Gießform 8 verformt.

Es versteht sich, daß die Erfindung nicht auf die Verwendung in Zusammenhang mit einer Rollenfreilaufkupplung beschränkt ist. Grundsätzlich eignet sie sich für den beliebigen Einsatz im Antriebszug mit drehbeweglichen Teilen, die der Kraftübertragung dienen, wobei regelmäßig der Nabe bzw. gegebenenfalls der dort eingespannten Welle die höchsten zu übertragenden Kräfte zugeleitet werden. Die erfindungsgemäße Lösung ist auch bei anderen Verbundbauteilen einsetzbar, bei denen trotz Angießens eines Teils aus leichterem Werkstoff harte und damit verschleißarme Arbeitsbereiche erforderlich sind.

## Patentansprüche

1. Verbundbauteil aus einem Druckgußteil aus einer Leichtmetallegierung und einem gegenüber dem Druckgußteil härterem Nabenteil, an welches das Druckgußteil über eine Gießform (7, 8) angegossen ist, wobei das Nabenteil (2) einen Dichtvorsprung (13, 14) aufweist, der sich insbesondere ringförmig an einer Stirnfläche (9, 10) des Nabenteils (2) erstreckt und der beim Druckgießen an der Gießform (7, 8) anliegt und von dieser plastisch verformbar ist.

2. Verbundbauteil nach Anspruch 1, **dadurch gekennzeichnet, daß** Dichtvorsprünge (13, 14) je an voneinander abgewandten Stirnflächen (9, 10) des Nabenteils (2) ausgebildet und insbesondere plastisch verformbar sind.

3. Verbundbauteil nach einem der vorhergehenden Ansprüche, **dadurch gekennzeichnet, daß** das Nabenteil (2) von dem Dichtvorsprung (13, 14) beabstandete Arbeitsbereiche (23, 24), insbesondere als Teil einer Nockenkontur (15) eines Außenlaufrings einer Rollenfreilaufkupplung, aufweist, die gehärtet sind, und daß der Dichtvorsprung (13, 14) ungehärtet ist.

4. Verbundbauteil nach einem der vorhergehenden Ansprüche, **dadurch gekennzeichnet, daß** die Dichtvorsprünge (13, 14) die Stirnflächen (9, 10) des Nabenteils (2) an deren radial äußeren Bereichen umgeben und von konischen Schrägflächen (12) umgeben sind, die je eine Grenzfläche zum Druckgußteil (3) bilden.

5. Verbundbauteil nach einem der vorhergehenden Ansprüche, **dadurch gekennzeichnet, daß** der Dichtvorsprung (13, 14) nach innen anschließend an eine Schrägfläche oder einen Außenkonus (12) des Nabenteils (2) ausgebildet ist, der - bezogen auf die Achse des Nabenteils (2) - einen Konuswinkel von 30 bis 85°, bevorzugt 45 bis 75° und insbesondere etwa 65°, aufweist.

6. Verbundbauteil nach einem der vorhergehenden Ansprüche, **dadurch gekennzeichnet, daß** das Druckgußteil (3) - radial einwärts gesehen - von den Dichtvorsprüngen (13, 14) begrenzt ist und sich vollständig radial außerhalb der Dichtvorsprünge erstreckt.

7. Verbundbauteil nach einem der vorhergehenden Ansprüche, **dadurch gekennzeichnet, daß** der Dichtvorsprung (13, 14) das Profil eines Dreiecks oder Sägezahns und/oder einen wulstförmigen Aufbau aufweist und insbesondere an seinem Kamm (20) mit einem Radius versehen ist.

8. Verbundbauteil nach einem der vorhergehenden Ansprüche, **dadurch gekennzeichnet, daß** der Dichtvorsprung (13, 14) von der sich radial erstreckenden Stirnfläche (9, 10) des Nabenteils (2) vorspringt und insbesondere ein Vorsprungmaß von etwa 0,05 bis 1 mm, bevorzugt 0,2 bis 0,5 mm und insbesondere etwa 0,3 mm, auf weist.

9. Verbundbauteil nach einem der vorhergehenden Ansprüche, **dadurch gekennzeichnet, daß** das Nabenteil (2) als Außenlaufring einer Rollenfreilaufkupplung ausgebildet ist, eine innere Nockenfläche (15) und an seinem Außenumfang eine Anzahl von radial vorragenden Flächenvorsprüngen (17) aufweist, die einen bruchgefährdeten Querschnitt (16) des Außenlaufrings verstärkend übergreifen und mit welchem das Druckgußteil (3) an dem Nabenteil (2) in Drehmoment-Übertragungsrichtung besser verankerbar ist.

## Claims

1. Composite component consisting of a pressure diecast part of a light alloy and a hub part which is harder than the pressure diecast part and onto which the pressure diecast part is cast by means of a casting mould (7, 8), wherein the hub part (2) has a sealing projection (13, 14) which extends in particular in the form of a ring at an end face (9, 10) of the hub part (2), lies against the casting mould (7, 8) during pressure diecasting and can be plastically deformed by the latter.

2. Composite component according to Claim 1, **characterised in that** sealing projections (13, 14) are in each case formed at end faces (9, 10), which are remote from one another, of the hub part (2) and can in particular undergo plastic deformation.

3. Composite component according to any one of the preceding Claims, **characterised in that** the hub part (2) has working regions (23, 24), disposed at a spacing from the sealing projection (13, 14), in particular as part of a cam contour (15) of an outer ring of a roller-type freewheeling clutch, which are hardened, and that the sealing projection (13, 14) is unhardened.

4. Composite component according to any one of the preceding Claims, **characterised in that** the sealing projections (13, 14) surround the end faces (9, 10) of the hub part (2) at the radially outer regions thereof and are surrounded by conical inclined faces (12), which in each case form a boundary face with the pressure diecast part (3).

5. Composite component according to any one of the preceding Claims, **characterised in that** the sealing projection (13, 14) is formed inwardly adjacent to an inclined face or an outer cone (12) of the hub part (2) which - related to the axis of the hub part (2) - has a cone angle of 30 to 85°, preferably 45 to 75° and in particular approximately 65°.

6. Composite component according to any one of the preceding Claims, **characterised in that** the pressure diecast part (3) - viewed radially inwards - is bounded by the sealing projections (13, 14) and extends completely radially outside of the sealing projections.

7. Composite component according to any one of the preceding Claims, **characterised in that** the sealing projection (13, 14) has the profile of a triangle or sawtooth and/or a beadshaped structure and is provided with a radius in particular at its crest (20).

8. Composite component according to any one of the preceding Claims, **characterised in that** the sealing projection (13, 14) projects from the radially extending end face (9, 10) of the hub part (2) and has in particular a projecting dimension of approximately 0.05 to 1 mm, preferably 0.2 to 0.5 mm and in particular approximately 0.3 mm.

9. Composite component according to any one of the preceding Claims, **characterised in that** the hub part (2) is formed as the outer ring of a roller-type freewheeling clutch, has an inner cam face (15) and, at its outer circumference, a number of radially protruding surface projections (17), which lap over a fracture-endangered cross section (16) of the outer ring with a reinforcing effect and which afford improved anchorage of the pressure diecast part (3) to the hub part (2) in the torque-transmitting direction.

## Revendications

1. Pièce composite constituée d'une pièce coulée sous pression en un alliage de métaux légers et d'une pièce formant moyeu plus dure que la pièce coulée sous pression et sur laquelle la pièce coulée sous pression est coulée par l'intermédiaire d'un moule de coulée (7, 8), la pièce formant moyeu (2) présentant une saillie d'étanchéité (13, 14) qui s'étend en particulier de manière annulaire sur une surface frontale (9, 10) de la pièce formant moyeu (2) et qui, lors de la coulée sous pression, est appliquée contre le moule de coulée (7, 8) et peut être déformée plastiquement par celui-ci.

2. Pièce composite selon la revendication 1, **caractérisée en ce que** des saillies d'étanchéité (13, 14) sont aménagées respectivement sur des surfaces frontales (9, 10), tournées à l'opposé l'une de l'autre, de la pièce formant moyeu (2) et sont notamment déformables plastiquement.

3. Pièce composite selon l'une des revendications précédentes, **caractérisée en ce que** la pièce formant moyeu (2) comporte des zones de travail (23, 24) espacées de la saillie d'étanchéité (13, 14), notamment en tant que partie d'un profil à cames (15) d'une bague extérieure d'un accouplement à roue libre à rouleaux, lesquelles zones de travail sont trempées, et que la saillie d'étanchéité (13, 14) n'est pas trempée.

4. Pièce composite selon l'une des revendications précédentes, **caractérisée en ce que** les saillies d'étanchéité (13, 14) entourent les surfaces frontales (9, 10) de la pièce formant moyeu (2) au niveau de leurs zones situées à l'extérieur dans la direction radiale et sont entourées par des surfaces obliques (12) coniques qui forment chacune une surface limite avec la pièce coulée sous pression (3).

5. Pièce composite selon l'une des revendications précédentes, **caractérisée en ce que** la saillie d'étanchéité (13, 14) est réalisée vers l'intérieur à la suite d'une surface oblique ou d'un cône extérieur (12) de la partie formant moyeu (2) qui, par rapport à l'axe de la partie formant moyeu (2), présente un angle de cône de 30 à 85°, de préférence de 45 à 75° et en particulier d'environ 65°.

6. Pièce composite selon l'une des revendications précédentes, **caractérisée en ce que** la pièce coulée sous pression (3), vue vers l'intérieur dans la direction radiale, est limitée par les saillies d'étanchéité (13, 14) et s'étend entièrement dans la direction radiale à l'extérieur des saillies d'étanchéité.

7. Pièce composite selon l'une des revendications précédentes, **caractérisée en ce que** la saillie d'étanchéité (13, 14) présente le profil d'un triangle ou d'une dent de scie et/ou a la forme d'un renflement et est pourvue d'un rayon notamment sur sa crête (20).

8. Pièce composite selon l'une des revendications précédentes, **caractérisée en ce que** la saillie d'étanchéité (13, 14) dépasse de la surface frontale (9, 10), s'étendant dans la direction radiale, de la pièce formant moyeu (2) et a en particulier une dimension d'environ 0,05 à 1 mm, de préférence de 0,2 à 0,5 mm et en particulier d'environ 0,3 mm.

9. Pièce composite selon l'une des revendications précédentes, **caractérisée en ce que** la pièce formant moyeu (2) est réalisée sous forme de bague extérieure d'un accouplement à roue libre à rouleaux, présente une surface à cames (15) intérieure, et, sur son pourtour extérieur, une pluralité de saillies planes (17) qui surmontent en la renforçant une section transversale (16) sensible à la rupture de la bague extérieure et avec lesquelles la pièce coulée sous pression (3) peut être mieux fixée sur la pièce formant moyeu (2) dans la direction de transmission de couple.
